# EUROPEAN PATENT APPLICATION

(11) **EP 4 776 568 A1**
(43) Date of publication of application: **15.07.2026**
(21) Application number: 25150764.6
(22) Date of filing: 08.01.2025
(51) Int. Cl.: H04L 9/40

(54) **NETWORK MONITOR AND METHOD**

(71) Applicant: Myra Security GmbH, 80687 Munich (DE)
(72) Inventor: Schumann, Sascha, 80687 Munich (DE)
(74) Representative: Global IP Europe Patentanwaltskanzlei

(57) **Abstract**

The present disclosure provides a network monitor comprising at least one data interface configured to receive an incoming data stream, at least one data extractor coupled to the at least one data interface and configured to extract predetermined relevant data from data packets of the incoming data stream and output respective data packages, a hash processor coupled to the at least one data extractor and configured to calculate a hash for each one of the data packages, and to increment a per-hash-counter for each occurrence of a respective hash in the data packages, and an anomaly detector configured to, if one of the per-hash-counters reaches a predetermined counter-individual counter threshold, detect an anomaly and output a respective anomaly signal for the respective per-hash-counter. Further, the present disclosure provides a respective method.

## Description

### TECHNICAL FIELD

The disclosure relates to a network monitor and a respective method.

### BACKGROUND

Although applicable to any type of network devices, the present disclosure will mainly be described in conjunction with devices that are accessible over public networks, like the internet.

If a network attached device is accessible via e.g., the internet, chances are high that such a device will suffer from malicious attacks. Such attacks may e.g., comprise unauthorized access, or so-called denial-of-service attacks. Detecting attacks and differentiating between legitimate access to the server and an attack is an important task in data networks.

Accordingly, there is a need for improving the detection of attacks on a network device.

### SUMMARY

The above stated problem is solved by the features of the independent claims. It is understood, that independent claims of a claim category may be formed in analogy to the dependent claims of another claim category.

Accordingly, it is provided:
A network monitor comprising at least one data interface configured to receive an incoming data stream, at least one data extractor coupled to the at least one data interface and configured to extract predetermined relevant data from data packets of the incoming data stream and output respective data packages, a hash processor coupled to the at least one data extractor and configured to calculate at least one hash for each one of the data packages, and to increment a per-hash-counter for each occurrence of a respective hash in the data packages, and an anomaly detector configured to, if the per-hash-counters calculated for a single one of the data packages reach a predetermined counter-individual counter threshold, detect an anomaly and output a respective anomaly signal for the respective data package.

Further, it is provided:
A network monitoring method comprising receiving an incoming data stream, extracting predetermined relevant data from data packets of the incoming data stream and outputting respective data packages, calculating at least one hash for each one of the data packages, incrementing a per-hash-counter for each occurrence of a respective hash in the data packages, and detecting an anomaly and outputting a respective anomaly signal for the respective one of the data packages (106, 206, 506), if the per-hash-counters calculated for a single one of the data packages reach a predetermined counter-individual counter threshold.

The present disclosure is based on the finding that traditional network anomaly detectors are based on a complex and slow architecture. Such traditional network anomaly detectors may comprise a router that is coupled to an analyzer, and the router and the analyzer may be coupled to a packet filet. Such topologies comprise multiple devices with a plurality of high bandwidth network connections and, e.g., require multiple 10s of seconds to detect a denial-of-service attack. Especially the analysis part may require high computational effort.

The present disclosure, therefore, provides the network monitor that is capable of performing a quick an efficient analysis of network packets, and therefore, drastically reduces the time required to detect a network anomaly, like a denial-of-service attack. Instead of up to 60 seconds, the latency for initiating counteractions, like dropping respective data packages, if malicious data packets are detected may be reduced to milliseconds with the solution of the present disclosure, since the detection and filtering of such data packets may be performed inline.

To this end, the network monitor comprises at least one data interface. It is understood, that multiple data interfaces may be provided. In exemplary embodiments, the network monitor may be implemented on a standard multicore processor. In such embodiments, the single cores may be grouped, and a single data interface may be provided per group. For example, on a processor with 64 cores four groups with 16 cores each may be defined. In such embodiments, four data interfaces may be provided.

In addition, a data extractor is provided. The data extractor receives that incoming data stream, e.g., in the form of single data packets, and extracts predefined relevant data from the data packets of the incoming data stream. The relevant data may for example refer to specific fields of the header or content of a respective data packet. For each data packet in the incoming data stream, the data extractor provides a respective data package.

In embodiments, a single data extractor may be defined that extracts the same relevant data from all packets of the incoming data stream. For example, in order to effectively detect a denial-of-service attack, the data extractor may extract a source IP address from all packets of the incoming data stream. The data extractor may, e.g., also extract the source IP address and the SYN flag. Other relevant data, like a destination IP address, a port, or any other relevant data of data packets in any one of the OSI layers may be extracted as relevant data by the data extractor.

The data extractor then forwards single data packages that only comprise the extracted relevant data for each packet of the incoming data stream to the hash processor. The hash processor calculates at least one hash over the content of the data packages and increments respective hash-individual counters, also called per-hash-counters.

In embodiments, a single hash may be calculated for each one of the data packets, and a single per-hash-counter may be provided for the respective hash. In other embodiments, two, three or more hash values may be calculated for each one of the data packets, and a dedicated per-hash-counter may be provided for each one of the respective possible hash values. In order to generate different hash values from the same data package, the hash calculations for different hashes may be performed with different initial values, also called IVs.

The hash processor with the per-hash-counters may be seen as a kind of bloom filter. However, instead of comparing resulting hash values with a predetermined set, a counter value is increased for the respective hash value.

The hash processor may only receive pre-processed data packages that only comprise the relevant data, and not the complete data packet of the incoming data stream. Therefore, if the relevant data of two packets of the incoming data stream is identical, even if the rest of the data of the packets may be different, the same hash value will be calculated by the hash processor. Consequently, the same per-hash-counter will be incremented.

The term "per-hash-counter" refers to a single counter being provided for every possible hash value. It is understood, that the hash processor may be configured to output a predetermined number of different hash values, for example 2^16 or 2^24 or more different hash values.

In embodiments, different data extractors may be provided that extract different relevant data, or a single data extractor may comprise multiple configurations to extract multiple sets of relevant data.

The anomaly detector monitors the values of the per-hash-counters, and outputs a respective anomaly signal if the values of the respective per-hash-counters for a specific data packet reach a predefined counter threshold. In embodiments, a single hash is calculated for each data package, and the anomaly signal is output if the respective single per-hash-counter has a value above the counter threshold. It is also possible to define a number of per-hash-counters per data packet that need to have a value higher than the respective counter threshold. For example, three hashes may be calculated for each data package, and the anomaly signal may be output if at least two of the respective counters have values above the respective counter thresholds. Using multiple per-hash-counters for each data packet reduces the risk of false-positive alarms.

The counter threshold may be defined as a counter-individual value that defines for each counter, i.e., for each hash, a limit for how often the respective hash may result from the incoming data stream.

The following pseudocode shows how the network monitor could be implemented:

| | |
|---|---|
| dp = fi(incoming data packet) | ← generate the data package |
| h = hash(dp) | ← calculate the hash |
| counter[h]++ | ← increment the respective counter |
| if(counter[x] > threshold[x]) | ← check counter value for all counters |
| output anomaly signal for per-hash-counter | |

The solution according to the present disclosure allows effectively screening a huge amount of incoming data in the incoming data stream and quickly reacting to any anomaly that is detected.

Further, instead of blocking e.g., all traffic for a specific source IP address, the generation of the data packet with only the relevant data allows dropping single data packets that result in the same hash, while other data packets, even from the same source IP address, may be forwarded.

The solution according to the present disclosure may be implemented on standard hardware, like multicore processors, without requiring special building blocks, like FPGAs, or the like.

The data interface may e.g., comprise standard network adapters that may be installed in a respective server. Exemplary network adapters may each provide a data rate of up to 100GB/s, 200GB/s or 400GB/s. Of course, future network adapters may provide higher data rates.

The data extractor, the hash processor, and the anomaly detector may be provided as computer programs or computer-executable instructions that may be executed by a processor or processor core in the respective server.

Generally, the data extractor, the hash processor, and the anomaly detector may comprise or may be provided in or as part of at least one of a dedicated processing element e.g., a processing unit, a microcontroller, a field programmable gate array, FPGA, a complex programmable logic device, CPLD, an application specific integrated circuit, ASIC, or the like. A respective program or configuration may be provided to implement the required functionality in such devices. The data extractor, the hash processor, and the anomaly detector may at least in part also be provided as a non-transitory computer program product comprising computer readable instructions that may be executed by a processing element. In a further embodiment, the the data extractor, the hash processor, and the anomaly detector may be provided as addition or additional function or method to the firmware or operating system of a processing element that is already present in the respective application as respective computer readable instructions. Such computer readable instructions may be stored in a memory that is coupled to or integrated into the processing element. The processing element may load the computer readable instructions from the memory and execute them. The same applies to any other element, unit or function disclosed herein as part of the the network monitor. In addition, it is understood, that any required supporting or additional hardware may be provided like e.g., a power supply circuitry and clock generation circuitry. Generally, any computer program or computer program product disclosed herein is to be understood as a non-transitory computer program product.

When implemented as computer program product executed by a multicore processor, the data interfaces may comprise or provide a single data queue for each core.

Generally, the incoming data stream may be provided to the data extractor via the queues. In embodiments, a dedicated data extractor may be provided per data interface or queue, or the data extractor may comprise multiple threads, e.g., one per data interface, queue or processor core. The same applies to the hash processor, and the anomaly detector, that may each be provided multiple times, or may comprise multiple threads, e.g., one per data interface, queue or processor core.

In a Linux-based environment, the network packets may be accessed via the XDP (eXpress Data Path). In other operating systems, XDP may be used, too, or similar alternative access paths may be used.

Summing up, the network monitor according to the present disclosure provides an effective tool to monitor incoming network traffic. Further, the network monitor may be implemented on standard computer or server hardware. This allows implementing a kind of "inline" network monitor that may be provided in a router without requiring additional external elements to perform the analysis, filtering, and routing of the incoming data stream.

It is understood, that a method according to the present disclosure may be implemented on a network monitor according to the present disclosure, and the respective interfaces and hardware elements of the network monitor may implement the respective method steps.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to independent claim 1 can be combined in all variations with each other and the disclosure of the description is not limited to the claim dependencies as specified in the claim set. Further, the features of the dependent claims referring to independent claim 1 may be combined with any of the features of the other independent claims or the dependent claims relating to any one of the other independent claims. In a respective method, respective method steps may perform the function of the respective apparatus elements, and in a respective apparatus, respective apparatus elements may perform the respective method steps.

In an embodiment, which can be combined with all other embodiments mentioned above or below, the network monitor may further comprise a reset controller that is configured to regularly reset the per-hash-counters.

In a network node that runs 24 hours a day, a huge traffic load may be received or processed. Consequently, even without an anomaly or attack being present the per-hash-counters may reach the predetermined threshold also under normal operating conditions.

In order to prevent the anomaly detector from detecting an anomaly under such normal operating conditions, the reset controller may reset the values of the per-hash-counters to zero in regular intervals.

In embodiments, the regular interval may, e.g., comprise between 100 ms and 1s, e.g., 100 ms intervals, 200 ms intervals, 300 ms intervals, 400 ms intervals, 500 ms intervals, 600 ms intervals, 700 ms intervals, 800 ms intervals, 900 ms intervals, or 1 s intervals.

In a further embodiment, which can be combined with all other embodiments mentioned above or below, the network monitor may further comprise a multicore processor with a predetermined number of cores, wherein each one of the cores executes an implementation of the data extractor, an implementation of the hash processor, and an implementation of the anomaly detector.

In embodiments, an individual reset controller may also be provided per core.

The predetermined number of cores may be any number larger than one. As explained above, in a multicore processor, each core may process an individual set of data packets of the incoming data stream. In the multi-core processor a number of data packets may, therefore, be processed in parallel, that number being equal to the number of cores. For example, in a 64 core processor, 64 data packets may be process in parallel.

In embodiments, the architecture of the multicore processor may be a so called AMD64 architecture with a 64-bit architecture.

In the context of the present disclosure, the term "core", and the term "thread" of a multi-threading processor, are exchangeable.

In another embodiment, which can be combined with all other embodiments mentioned above or below, cores of the multicore processor that are implemented in a common logical group in the multicore processor may be supplied with data packets from the incoming data stream of the same data interface.

The term "logical group" may also comprise respective hardware-based grouping features. In modern multicore processors, the single cores are usually grouped into logical groups, for example, 16 cores may be provided in a common die. Consequently, providing the data packets from a single data interface to a single one of such logical groups allows the same cores to use the same access path without the need to switch data paths between the data interface and different cores or logical groups.

In a further embodiment, which can be combined with all other embodiments mentioned above or below, the at least one data interface may comprise a dedicated data queue for each one of the cores.

The term "data queue" may refer to a data queue in the data interface that may be directly accessed by the respective processor, e.g., via the above-mentioned XDP. Each one of the cores, therefore, is efficiently supplied with the data to be processed.

In an embodiment, which can be combined with all other embodiments mentioned above or below, the network monitor may comprise at least two implementations of the data extractor, the hash processor, and the anomaly detector. Further the network monitor may comprise a monitor manager that is configured to collect the counter values of the per-hash-counters of the at least two implementations in predetermined intervals, and to accumulate the counter values of the per-hash-counters for identical hash values in the at least two implementations, and to output a respective anomaly signal if a respective one of the accumulated counter values is higher than a respective accumulative threshold.

The two implementations of the signal processing chains comprising the data extractor, the hash processor, and the anomaly detector may be implemented as indicated above, each on a different core of a multicore processor.

Each one of the implementations will handle its own set of per-hash-counters. Consequently, by accumulating the counter values over all implementations, the monitor manager may determine if the respective accumulative threshold is exceeded in the combined per-hash-counters of the network monitor. The predetermined interval may be the same as the interval used by the reset controller. In other embodiments, the predetermined interval may be larger than the interval used by the reset controller, e.g., 1 s.

In embodiments, the counter-individual counter threshold may be the same as the accumulative threshold for a respective one of the hash values. In other embodiments, the counter-individual counter threshold may differ from the accumulative threshold for a respective one of the hash values.

In another embodiment, which can be combined with all other embodiments mentioned above or below, the anomaly detector may be configured to set the highest bit of a respective one of the per-hash-counters to one if the value of the respective per-hash-counter reaches the predetermined counter-individual counter threshold, and the anomaly detector may further be configured to skip the comparing of the values of the per-hash-counters with the respective counter-individual counter thresholds if the highest bit of the respective per-hash-counters calculated for a single one of the data packages is one, and to directly output the anomaly signal.

In such embodiments, the highest or most significant bit of the respective per-hash-counters may be used as a flag. Using this bit as flag, halves the maximum possible counter value. However, in modern computer systems, like those of the above-mentioned AMD64 architecture, a 64 bit value may be used for each per-hash-counter. Using only 63 bits for the counter value still results in a high enough maximum counter value. In real applications, the actual counter-individual counter thresholds may be between 10.000 and 1.000.000 counts, like 100.000, 200.000 or 300.000.

In embodiments, a single hash, and, therefore, a single per-hash counter may be used for each data packet. In other embodiments, multiple hashes, and therefore, multiple per-hash counters may be used per data packet.

The anomaly detector may in such embodiments reuse the knowledge that the counter-individual counter threshold is already reached for a specific hash value or specific hash values for the same data packet, and directly output the respective anomaly signal.

In embodiments with the monitor manager, the highest bit may also be set by the monitor manager if the accumulated counter values are higher than the accumulative threshold for a specific per-hash-counter.

In a further embodiment, which can be combined with all other embodiments mentioned above or below, the network monitor may further comprise a package filter that is coupled to the at least one data interface and the anomaly detector and that is configured to drop a package of the incoming data stream if the anomaly detector outputs the anomaly signal for the respective package.

As explained above, the network monitor may not only be used as a stand-alone analyzer for incoming network traffic. The increased speed and flexibility of the anomaly detection performed by the network monitor allows using the network monitor, e.g., inline in a router, and to dynamically drop packages in the router if an anomaly is detected for the respective package.

In an embodiment, which can be combined with all other embodiments mentioned above or below, the hash processor may be configured to calculate a pre-hash based on content of the data packages, add predetermined payload data of the respective data packet to the pre-hash, and calculate the hash for the pre-hash with the predetermined payload data.

Calculating a pre-hash and a hash provides a finer control over how the hash is calculated and which packets are, consequently, identified as increasing a counter value.

The predetermined payload data may, e.g., refer to TCP flags of the respective data packet. In an exemplary embodiment, the relevant data may, e.g., comprise a destination IP address, and optionally a port number.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a network monitor according to the present disclosure;
Figure 2 shows a block diagram of another embodiment of a network monitor according to the present disclosure;
Figure 3 shows a block diagram of a further embodiment of a network monitor according to the present disclosure;
Figure 4 shows a block diagram of another embodiment of a network monitor according to the present disclosure;
Figure 5 shows a block diagram of a further embodiment of a network monitor according to the present disclosure; and
Figure 6 shows a flow diagram of an embodiment of a method according to the present disclosure.

In the figures like reference signs denote like elements unless stated otherwise.

### DETAILED DESCRIPTION OF THE DRAWINGS

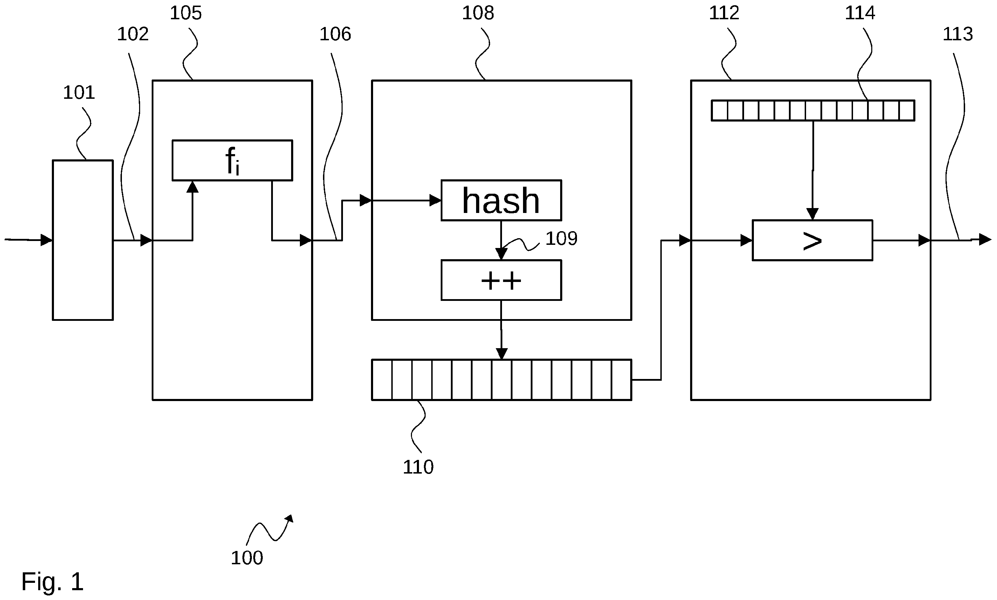

Figure 1 shows a block diagram of a network monitor 100. The network monitor 100 comprises a data interface 101 that is coupled to a data extractor 105. The data extractor 105 is coupled to a hash processor 108 that is coupled to an array of per-hash-counters 110. The per-hash-counters 110 are coupled to anomaly detector 112. It is understood, that any explanations provided herein for any embodiment of the network monitor also apply mutatis mutandis to network monitor 100.

During operation of the network monitor 100, data interface 101 receives an incoming data stream 102, and forwards the data packets of the incoming data stream 102 to data extractor 105. The data extractor 105 extracts predetermined relevant data from data packets of the incoming data stream 102 and outputs respective data packages 106 to hash processor 108. The hash processor 108 calculates at least one hash 109 for each one of the data packages 106, and increments a dedicated per-hash-counter 110 for each occurrence of a respective hash 109 in the data packages 106. The anomaly detector 112, if a predetermined number, e.g., all, of the per-hash-counters 110 calculated for a single one of the data packages 106 reach a predetermined counter-individual counter threshold 114, detects an anomaly and outputs a respective anomaly signal 113 for the respective data packet 106.

The anomaly signal 113 indicates that the respective packet of the incoming data stream 102 may be malicious, and may be dropped or otherwise handled accordingly.

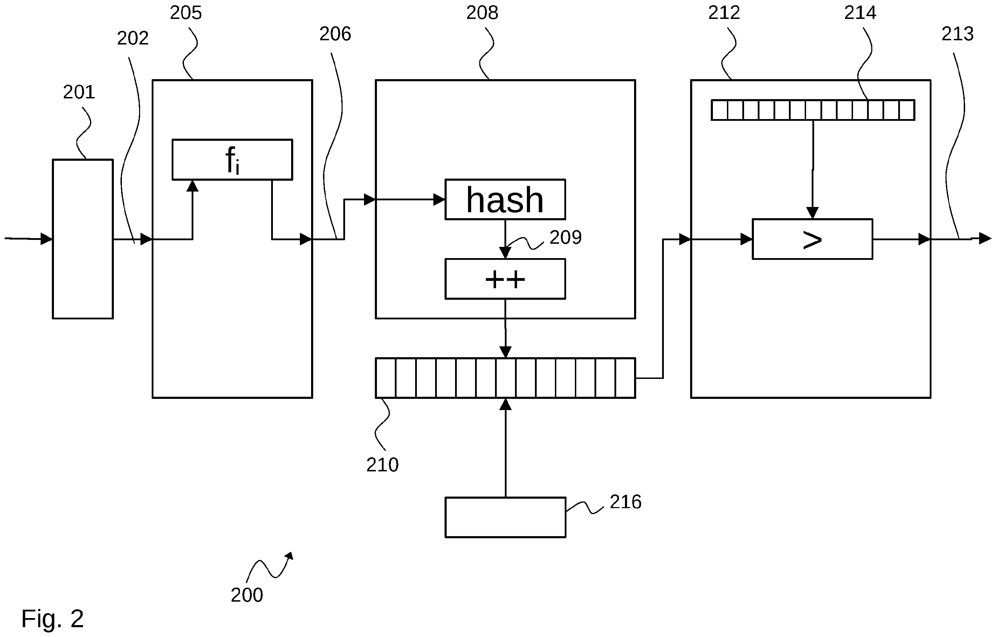

Figure 2 shows a block diagram of a network monitor 200. The network monitor 200 is based on the network monitor 100. Therefore, the network monitor 200 comprises a data interface 201 that is coupled to a data extractor 205. The data extractor 205 is coupled to a hash processor 208 that is coupled to an array of per-hash-counters 210. The per-hash-counters 210 are coupled to anomaly detector 212. It is understood, that any explanations provided herein for any embodiment of the network monitor also apply mutatis mutandis to network monitor 200.

The network monitor 200 further comprises a reset controller 216 that is coupled to the per-hash-counters 210 to regularly reset the per-hash-counters 210. This prevents the per-hash-counters 210 reaching the counter-individual counter thresholds 214 during long-time normal operation of the network monitor 200.

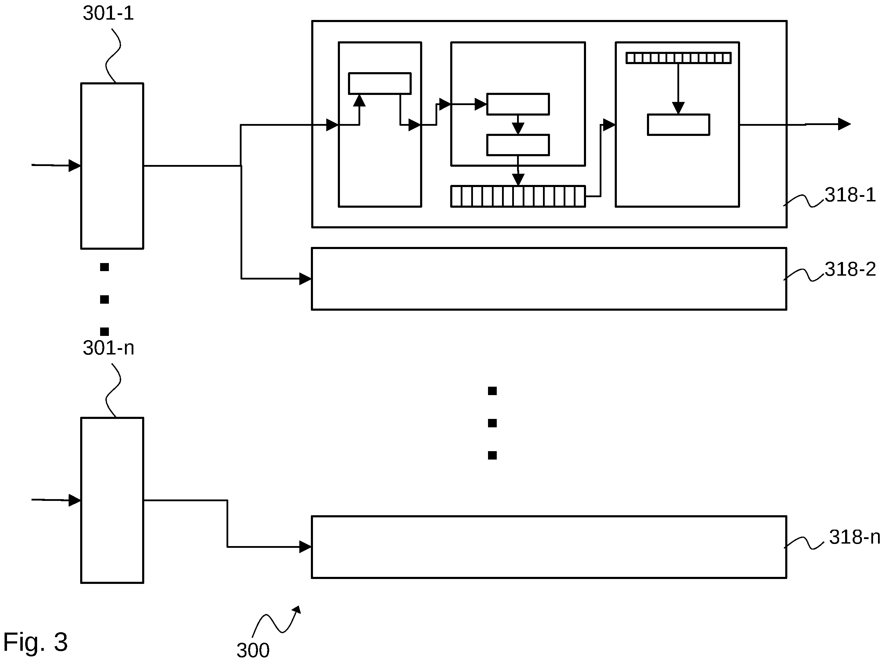

Figure 3 shows a block diagram of a network monitor 300. The network monitor 300 comprises a multicore processor with a plurality of cores 318-1 - 318-n. For example, 64 cores may be provided. Each one of the cores comprises, executes or performs the function of a data extractor, a hash processor, the array of per-hash-counters, and an anomaly detector. Although not explicitly mentioned the data extractors, hash processors, arrays of per-hash-counters, and anomaly detectors of the cores 318-1 - 318-n may be implemented according to any one of the embodiments described herein. It is understood, that any explanations provided herein for any embodiment of the network monitor also apply mutatis mutandis to network monitor 300.

The network monitor 300 comprises at least one data interface 301-1 - 301-n, wherein any number of data interfaces 301-1 - 301-n is possible. Each one of the data interfaces 301-1 - 301-n is coupled to at least one of the cores 318-1 - 318-n, and may be coupled to multiple cores 318-1 - 318-n at the same time. The data interfaces 301-1 - 301-n may each comprise a dedicated data queue for each one of the cores 318-1 - 318-n, and provide data packets to the single cores 318-1 - 318-n consecutively from the respective data queue.

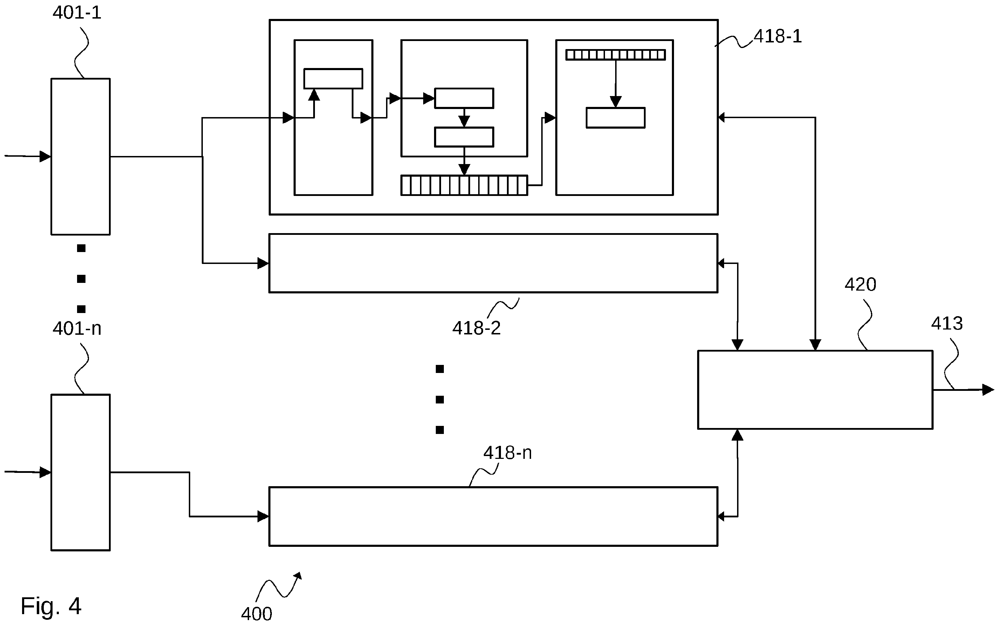

Figure 4 shows a block diagram of a network monitor 400. The network monitor 400 is based on the network monitor 300. Therefore, the network monitor 400 comprises a multicore processor with a plurality of cores 418-1 - 418-n. For example, 64 cores may be provided. Each one of the cores comprises, executes or performs the function of a data extractor, a hash processor, the array of per-hash-counters, and an anomaly detector. A number of data interfaces 401-1 - 401-n is provided, each data interfaces 301-1 - 301-n being coupled to at least one of the cores 318-1 - 318-n. Although not explicitly mentioned the data extractors, hash processors, arrays of per-hash-counters, and anomaly detectors of the cores 418-1 - 418-n may be implemented according to any one of the embodiments described herein. It is understood, that any explanations provided herein for any embodiment of the network monitor also apply mutatis mutandis to network monitor 400.

The network monitor 400 further comprises a monitor manager 420 that is coupled to the single cores 418-1 - 418-n. The monitor manager 420 collects the counter values of the per-hash-counters from the single cores 418-1 - 418-n, and accumulates the counter values for identical hash values. If a respective one of the accumulated counter values is higher than a respective accumulative threshold, the monitor manager 420 outputs a respective anomaly signal 413.

The monitor manager may also perform further managing functions within the network monitor 400.

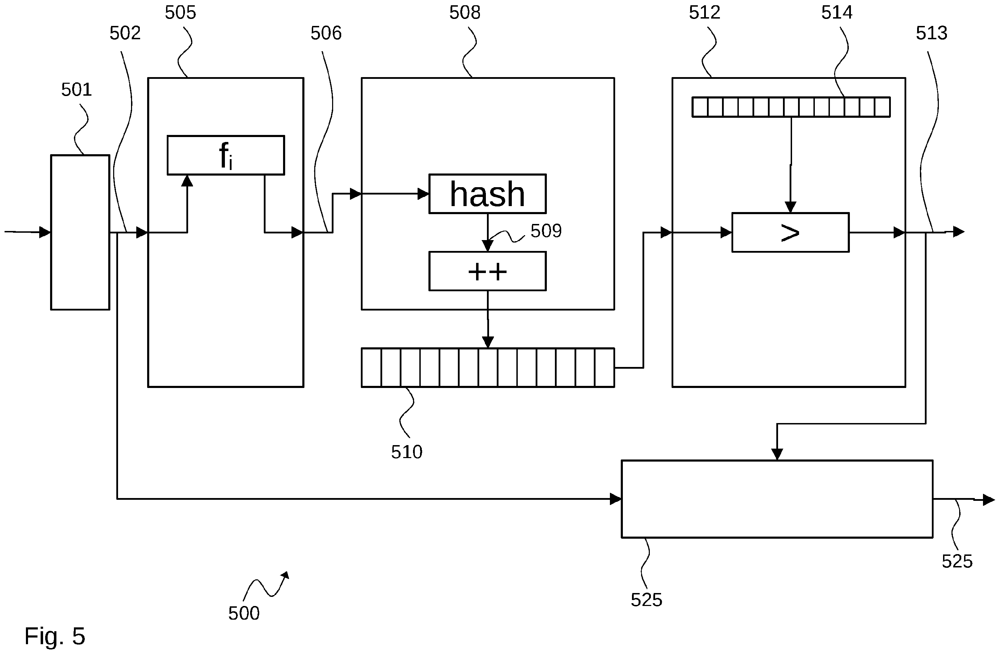

Figure 5 shows a block diagram of a network monitor 500. The network monitor 500 is based on the network monitor 100. Therefore, the network monitor 500 comprises a data interface 501 that is coupled to a data extractor 505. The data extractor 505 is coupled to a hash processor 508 that is coupled to an array of per-hash-counters 510. The per-hash-counters 510 are coupled to anomaly detector 512. It is understood, that any explanations provided herein for any embodiment of the network monitor also apply mutatis mutandis to network monitor 500.

The network monitor 500 further comprises a package filter 525 that is coupled to the data interface 501 and the anomaly detector 512. The package filter 525 drops a package of the incoming data stream 502 if the anomaly detector 512 outputs the anomaly signal 513 for the respective package. Any other data packet may be forwarded by the package filter 525 for further processing.

In other embodiments, the anomaly detector 512 and the package filter 525 may be implemented as a single unit.

The same applies to any other element of the network monitor described herein. Any element of the network monitor that is described as being coupled to another element, or as receiving a signal or providing a signal to another element may also be implemented with the respective element as a single unit.

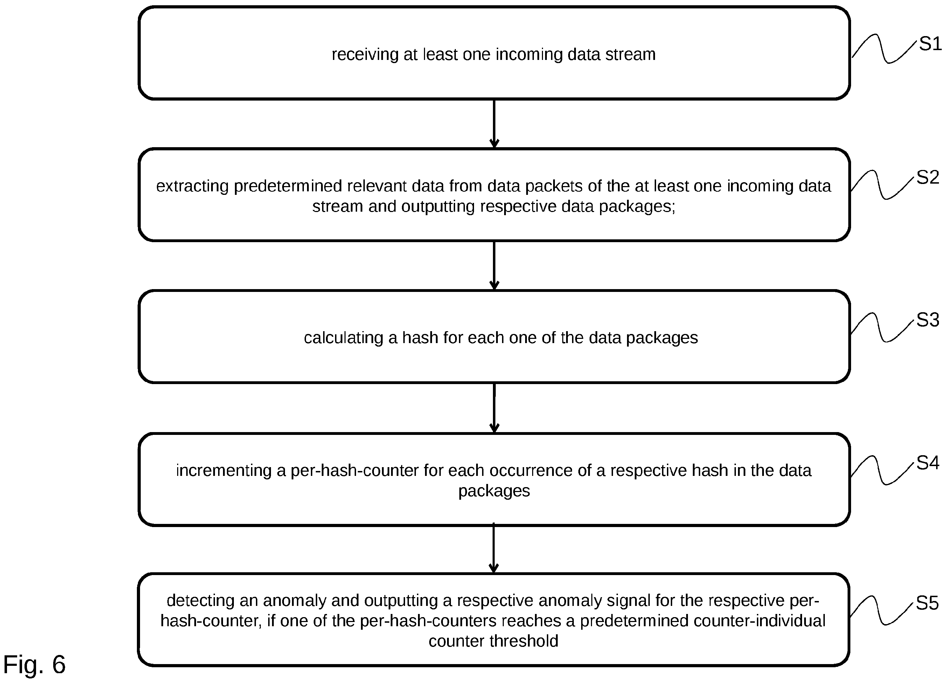

For sake of clarity in the following description of the method-based figure 6 the reference signs used above in the description of apparatus-based figures 1 - 5 will be maintained.

Figure 6 shows a flow diagram of a network monitoring method. The method comprises receiving S1 at least one incoming data stream 102, 202, 502, extracting S2 predetermined relevant data from data packets of the at least one incoming data stream 102, 202, 502 and outputting respective data packages 106, 206, 506, calculating S3 a hash 109, 209, 509 for each one of the data packages 106, 206, 506, incrementing S4 a per-hash-counter 110, 210, 510 for each occurrence of a respective hash 109, 209, 509 in the data packages 106, 206, 506, and detecting S5 an anomaly and outputting a respective anomaly signal 113, 213, 413, 513 for the respective per-hash-counter 110, 210, 510, if one of the per-hash-counters 110, 210, 510 reaches a predetermined counter-individual counter threshold 114, 214, 514.

The method may further comprise regularly resetting the per-hash-counters 110, 210, 510.

Calculating S3 the hash 109, 209, 509 may comprise calculating a respective pre-hash based on content of each one of the data packages 106, 206, 506, adding predetermined payload data of the respective data packet to the pre-hash, and calculating the hash 109, 209, 509 for the pre-hash with the predetermined payload data.

During execution, at least one of the extracting, calculating, incrementing, and detecting may be performed in parallel for different data packets of the incoming data stream 102, 202, 502, especially on at least two cores 318-1, 318-2, 318-n, 418-1, 418-2, 418-n of a multicore processor. The cores 318-1, 318-2, 318-n, 418-1, 418-2, 418-n of the multicore processor that are implemented in a common logical group in the multi-core processor may be supplied with data packets of the same incoming data stream 102, 202, 502. The at least one data interface 101, 201, 301-1, 301-n, 401-1, 401-n, 501 may comprises a dedicated data queue for each one of the cores 318-1, 318-2, 318-n, 418-1, 418-2, 418-n.

The method may further comprise accumulating the counter values of the per-hash-counters 110, 210, 510 for identical hash values of the calculating steps executed in parallel, and outputting a respective anomaly signal 113, 213, 413, 513 if a respective one of the accumulated counter values is higher than a respective accumulative threshold.

In embodiments, the method may further comprise setting the highest bit of a respective one of the per-hash-counters 110, 210, 510 to one if the value of the respective per-hash-counter 110, 210, 510 reaches the predetermined counter-individual counter threshold 114, 214, 514, and skipping comparing of the values of the per-hash-counters 110, 210, 510 with the respective counter-individual counter thresholds 114, 214, 514 if the highest bit of the respective per-hash-counters (110, 210, 510) calculated for a single one of the data packages (106, 206, 506) is one, and directly outputting the anomaly signal 113, 213, 413, 513.

The method may further comprise dropping a package of the incoming data stream 102, 202, 502 if the anomaly signal 113, 213, 413, 513 is provided for the respective package.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- 100, 200, 300, 400, 500: network monitor
- 101, 201, 301-1, 301-n: data interface
- 401-1, 401-n, 501: data interface
- 102, 202, 502: incoming data stream
- 105, 205, 505: data extractor
- 106, 206, 506: data package
- 108, 208, 508: hash processor
- 109, 209, 509: hash
- 110, 210, 510: per-hash-counters
- 112, 212, 512: anomaly detector
- 113, 213, 413, 513: anomaly signal
- 114, 214, 514: counter-individual counter thresholds
- 216: reset controller
- 318-1, 318-2, 318-n: core
- 418-1, 418-2, 418-n: core
- 420: monitor manager
- 525: package filter
- 256: forwarded packet
- S1-S5: method steps

## Claims

1. Network monitor (100, 200, 300, 400, 500) comprising:
at least one data interface (101, 201, 301-1, 301-n, 401-1, 401-n, 501) configured to receive an incoming data stream (102, 202, 502);
at least one data extractor (105, 205, 505) coupled to the at least one data interface (101, 201, 301-1, 301-n, 401-1, 401-n, 501) and configured to extract predetermined relevant data from data packets of the incoming data stream (102, 202, 502) and output respective data packages (106, 206, 506);
a hash processor (108, 208, 508) coupled to the at least one data extractor (105, 205, 505) and configured to calculate at least one hash (109, 209, 509) for each one of the data packages (106, 206, 506), and to increment a per-hash-counter (110, 210, 510) for each occurrence of a respective hash (109, 209, 509) in the data packages (106, 206, 506); and
an anomaly detector (112, 212, 512) configured to, if the per-hash-counters (110, 210, 510) calculated for a single one of the data packages (106, 206, 506) reach predetermined counter-individual counter thresholds (114, 214, 514), detect an anomaly and output a respective anomaly signal (113, 213, 413, 513) for the respective data packet (106, 206, 506).

2. Network monitor (100, 200, 300, 400, 500) according to claim 1, comprising a reset controller (216) that is configured to regularly reset the per-hash-counters (110, 210, 510).

3. Network monitor (100, 200, 300, 400, 500) according to any one of the preceding claims, comprising a multi-core processor with a predetermined number of cores (318-1, 318-2, 318-n, 418-1, 418-2, 418-n), wherein each one of the cores (318-1, 318-2, 318-n, 418-1, 418-2, 418-n) executes at least one of an implementation of the data extractor (105, 205, 505) , an implementation of the hash processor (108, 208, 508), and an implementation of the anomaly detector (112, 212, 512).

4. Network monitor (100, 200, 300, 400, 500) according to claim 3, wherein cores (318-1, 318-2, 318-n, 418-1, 418-2, 418-n) of the multi-core processor that are implemented in a common logical group in the multi-core processor are supplied with data packets from the incoming data stream (102, 202, 502) of the same data interface (101, 201, 301-1, 301-n, 401-1, 401-n, 501).

5. Network monitor (100, 200, 300, 400, 500) according to any one of the preceding claims 3 and 4, wherein the at least one data interface (101, 201, 301-1, 301-n, 401-1, 401-n, 501) comprises a dedicated data queue for each one of the cores (318-1, 318-2, 318-n, 418-1, 418-2, 418-n).

6. Network monitor (100, 200, 300, 400, 500) according to any one of the preceding claims, comprising at least two implementations of the data extractor (105, 205, 505) , the hash processor (108, 208, 508), and the anomaly detector (112, 212, 512); and
further comprising a monitor manager (420) that is configured to collect the counter values of the per-hash-counters (110, 210, 510) of the at least two implementations in predetermined intervals, and to accumulate the counter values of the per-hash-counters (110, 210, 510) for identical hash values in the at least two implementations, and to output a respective anomaly signal (113, 213, 413, 513) if a respective one of the accumulated counter values is higher than a respective accumulative threshold.

7. Network monitor (100, 200, 300, 400, 500) according to any one of the preceding claims, wherein the anomaly detector (112, 212, 512) is configured to set the highest bit of a respective one of the per-hash-counters (110, 210, 510) to one if the value of the respective per-hash-counter (110, 210, 510) reaches the predetermined counter-individual counter threshold (114, 214, 514); and
wherein the anomaly detector (112, 212, 512) is further configured to skip the comparing of the values of the per-hash-counters (110, 210, 510) with the respective counter-individual counter thresholds (114, 214, 514) if the highest bit of the respective per-hash-counters (110, 210, 510) calculated for a single one of the data packages (106, 206, 506) is one, and to directly output the anomaly signal (113, 213, 413, 513).

8. Network monitor (100, 200, 300, 400, 500) according to any one of the preceding claims, further comprising a package filter (525) that is coupled to the at least one data interface (101, 201, 301-1, 301-n, 401-1, 401-n, 501) and the anomaly detector (112, 212, 512) and that is configured to drop a package of the incoming data stream (102, 202, 502) if the anomaly detector (112, 212, 512) outputs the anomaly signal (113, 213, 413, 513) for the respective package.

9. Network monitor (100, 200, 300, 400, 500) according to any one of the preceding claims, wherein the hash processor (108, 208, 508) is configured to calculate a pre-hash based on content of the data packages (106, 206, 506), add predetermined payload data of the respective data packet to the pre-hash, and calculate the hash (109, 209, 509) for the pre-hash with the predetermined payload data.

10. Network monitoring method comprising:
receiving (S1) at least one incoming data stream (102, 202, 502);
extracting (S2) predetermined relevant data from data packets of the at least one incoming data stream (102, 202, 502) and outputting respective data packages (106, 206, 506);
calculating (S3) at least one hash (109, 209, 509) for each one of the data packages (106, 206, 506);
incrementing (S4) a per-hash-counter (110, 210, 510) for each occurrence of a respective hash (109, 209, 509) in the data packages (106, 206, 506); and
detecting (S5) an anomaly and outputting a respective anomaly signal (113, 213, 413, 513) for the respective one of the data packages (106, 206, 506), if the per-hash-counters (110, 210, 510) calculated for the respective one of the data packages (106, 206, 506) reach a predetermined counter-individual counter threshold (114, 214, 514).

11. Network monitoring method according to claim 10, further comprising regularly resetting the per-hash-counters (110, 210, 510).

12. Network monitoring method according to any one of the preceding method-based claims, further comprising executing at least one of the extracting, calculating, incrementing, and detecting in parallel, especially on at least two cores (318-1, 318-2, 318-n, 418-1, 418-2, 418-n) of a multi-core processor;
especially wherein cores (318-1, 318-2, 318-n, 418-1, 418-2, 418-n) of the multi-core processor that are implemented in a common logical group in the multi-core processor are supplied with data packets of the same incoming data stream (102, 202, 502); and/or especially wherein the at least one data interface (101, 201, 301-1, 301-n, 401-1, 401-n, 501) comprises a dedicated data queue for each one of the cores (318-1, 318-2, 318-n, 418-1, 418-2, 418-n).

13. Network monitoring method according to claim 12, further comprising:
accumulating the counter values of the per-hash-counters (110, 210, 510) for identical hash values of the calculating steps executed in parallel; and
outputting a respective anomaly signal (113, 213, 413, 513) if a respective one of the accumulated counter values is higher than a respective accumulative threshold.

14. Network monitoring method according to any one of the preceding method-based claims, further comprising:
setting the highest bit of a respective one of the per-hash-counters (110, 210, 510) to one if the value of the respective per-hash-counter (110, 210, 510) reaches the predetermined counter-individual counter threshold (114, 214, 514); and
skipping comparing of the values of the per-hash-counters (110, 210, 510) with the respective counter-individual counter thresholds (114, 214, 514) if the highest bit of the respective per-hash-counters (110, 210, 510) calculated for a single one of the data packages (106, 206, 506) is one, and directly outputting the anomaly signal (113, 213, 413, 513).

15. Network monitoring method according to any one of the preceding method-based claims, further comprising:
dropping a package of the incoming data stream (102, 202, 502) if the anomaly signal (113, 213, 413, 513) is provided for the respective package; and/or
calculating a respective pre-hash based on content of each one of the data packages (106, 206, 506), adding predetermined payload data of the respective data packet to the pre-hash, and calculating the hash (109, 209, 509) for the pre-hash with the predetermined payload data.
